# FASCICULE DE BREVET EUROPEEN

(11) **EP 2 327 200 B1**
(45) Date de publication et mention de la délivrance du brevet: **31.10.2012**
(21) Numéro de dépôt: 09737079.5
(22) Date de dépôt: 17.07.2009
(51) Int. Cl.: H04L 29/08

(54) **PROCEDE D'OBTENTION D'INFORMATIONS D'UN ENVIRONNEMENT LOCAL D'UN TERMINAL**
VERFAHREN ZUM ERHALTEN VON INFORMATIONEN AUS EINER LOKALEN ENDGERÄTEUMGEBUNG
METHOD FOR OBTAINING INFORMATION FROM A LOCAL TERMINAL ENVIRONMENT

(30) Priorité: 28.07.2008 FR 0855170
(43) Date de publication de la demande: 01.06.2011
(73) Titulaire: France Télécom, 75015 Paris (FR)
(72) Inventeur: RADIER, Benoît, F-22700 Perros Guirec (FR); MARREC, Anne, F-22560 Pleumeur-Bodou (FR); SALAUN, Mikaël, F-29590 Rosnoen (FR)
(74) Mandataire: Pecher, Gilles
(86) Numéro de dépôt international: PCT/FR2009/051432
(87) Numéro de publication internationale: WO 2010/012934

(56) Documents cités:
- EP-A- 1 881 639
- "Telecommunications and Internet converged Services and Protocols for Advanced Networking (TISPAN); NGN Functional Architecture; Network Attachment Sub-System (NASS); ETSI ES 282 004" ETSI STANDARDS, LIS, SOPHIA ANTIPOLIS CEDEX, FRANCE, vol. TISPAN, no. V2.0.0, 1 février 2008 (2008-02-01), XP014041575 ISSN: 0000-0001
- "Telecommunications and Internet converged Services and Protocols for Advanced Networking (TISPAN); Customer Devices architecture and Reference Points; ETSI TS 185 006" ETSI STANDARDS, LIS, SOPHIA ANTIPOLIS CEDEX, FRANCE, vol. TISPAN, no. V2.0.0, 1 mars 2008 (2008-03-01), XP014041848 ISSN: 0000-0001

## Description

### Arrière-plan de l'invention

La présente invention concerne un procédé pour obtenir depuis un réseau d'accès (par exemple de type WAN : « Wide Area Network »), des informations relatives à un environnement local d'un terminal appartenant à un réseau local (par exemple de type LAN : « Local Area Network »).

L'invention trouve une application privilégiée dans le domaine de la fourniture de services personnalisés, pour permettre en particulier à des opérateurs de télécommunications et/ou des fournisseurs de services, de fournir à un terminal des services adaptés à son environnement local, en fonction d'informations d'environnement relatives au réseau local auquel appartient le terminal.

Le terminal accède à un service, à travers une ligne du client d'un opérateur de réseau d'accès de type RTC (« Réseau Téléphonique Commuté »), l'accès au réseau étant effectué à travers un équipement de type NAS (« Network Access Server ») ou BAS (« Broadband Access Server »).

Le terminal est contrôlé par l'opérateur du réseau d'accès auprès duquel il obtient une adresse IP (« Internet Protocol »). Pour cela, le terminal est identifié auprès d'un serveur de session d'accès.

Dans le contexte de l'invention, on entendra par serveur de sessions d'accès réseau (CLF « Connectivity Session Location and Repository Function ») un serveur permettant de collecter des informations sur des sessions utilisateur au niveau du réseau d'accès. De manière connue, le serveur de sessions enregistre l'association d'une adresse IP d'un terminal et des informations de localisation géographique du réseau correspondantes, des caractéristiques sur l'accès (débit montant, débit descendant, caractéristiques physiques de la ligne), le nom du propriétaire de l'accès.

Par ailleurs, le terminal est configuré sur le réseau local par un serveur d'auto-configuration appartenant au réseau d'accès.

Dans le contexte de l'invention, on entendra par serveur d'auto-configuration (ACS pour « AutoConfiguration Server » ou CNGCF « Customer Network Gateway Configuration Function » ou CPECF « Customer Premises Equipment Configuration Function ») un serveur permettant à un terminal de se paramétrer et de se configurer automatiquement pour qu'il puisse accéder aux services souscrits par le client auprès d'un fournisseur de services, en fonction du type du terminal et de droits d'accès aux services du client. Par conséquent, le serveur d'auto-configuration contient l'ensemble des droits d'accès aux services des clients, ainsi que les différents paramètres permettant de configurer les différents types de terminaux de ces clients. Le serveur d'auto-configuration est apte à récupérer les modifications d'état des terminaux et les différentes informations sur les configurations des terminaux.

La fourniture du service au terminal est assurée par un serveur d'application (AF « Application Function »).

Actuellement, il n'existe pas de procédé qui permette d'obtenir depuis le réseau d'accès, des informations d'environnement local relatives à un terminal appartenant à un réseau local ou domestique, de manière fiable et simple. Par informations d'environnement local, on entend par la suite informations d'environnement dans le réseau local ou domestique.

*A fortiori,* un tel procédé n'est pas mis en oeuvre pour fournir un service adapté à un terminal sur un réseau local ou domestique, en fonction d'informations d'environnement local obtenues à partir du réseau d'accès.

Le document WO 2010/012934 décrit un serveur d'autoconfiguration CNGCF.

### Objet et résumé de l'invention

L'invention est définie dans les revendications indépendantes 1, 3, 5 et 8-10. Des modes de réalisation préférés de l'invention sont définis dans les revendications dépendantes.

La présente invention propose un procédé d'obtention par un serveur de sessions d'accès d'informations relatives à un terminal appartenant à un réseau local, ledit serveur de sessions d'accès étant adapté à fournir des informations relatives à une session d'accès du terminal à un réseau d'accès,
ledit procédé d'obtention étant caractérisé en ce qu'il comprend, sur réception d'une requête d'informations relatives au terminal en provenance d'un serveur d'application, l'obtention auprès d'un serveur d'auto-configuration, d'informations relatives à un environnement local dudit terminal et la fourniture desdites informations audit serveur d'application.

La présente invention vise également un procédé de fourniture de service à un terminal appartenant à un réseau local, comprenant :
- l'envoi d'une requête d'informations relatives à un terminal par un serveur d'application à un serveur de sessions d'accès ;
- l'obtention et la fourniture par ledit serveur de sessions d'accès audit serveur d'applications d'informations relatives à une session d'accès du terminal à un réseau d'accès ;
- l'obtention et la fourniture desdites informations relatives à un environnement local du terminal audit serveur d'application par ledit serveur de sessions d'accès conformément à un procédé d'obtention tel que décrit précédemment ; et
- la fourniture par ledit serveur d'application audit terminal d'au moins un service adapté en fonction à la fois des informations relatives à une session d'accès du terminal et des informations relatives à un environnement local du terminal.

Le procédé de fourniture de service selon l'invention est avantageusement utilisé pour récupérer simultanément des informations de sessions et des informations d'environnement local et fournir un service adapté à chaque terminal en fonction de ces informations.

De manière classique, le terminal sur le réseau local communique avec les serveurs du réseau d'accès par l'intermédiaire d'une passerelle (« gateway »), qui peut être une passerelle résidentielle dans le cas d'un réseau local domestique. Dans le cas où la passerelle est un modem routeur, le terminal est caché derrière la passerelle. Dans le cas où la passerelle est un modem pont, le terminal est directement visible depuis le réseau d'accès.

D'une part, le fait que les informations d'environnement local soient obtenues auprès du serveur d'auto-configuration permet de garantir la véracité de ces informations et de maintenir un bon niveau de confiance auprès d'une entité tierce telle qu'un serveur d'application. La véracité de ces informations est garantie dans la mesure où celles-ci sont maintenues au niveau du serveur d'auto-configuration qui est sous le contrôle d'un opérateur ou d'un fournisseur de services. De cette manière, on évite à un terminal de fournir lui-même à une entité tierce ses propres informations d'environnement local qu'il aurait pu falsifier. Ainsi, il est possible d'empêcher une utilisation frauduleuse de ces informations.

D'autre part, l'obtention des informations d'environnement local par l'intermédiaire du serveur de sessions d'accès est simple à mettre en oeuvre, dans la mesure où elle ne fait pas intervenir d'interface de communication supplémentaire par rapport à ce qui existe actuellement.

Selon une caractéristique de la présente invention, le serveur de sessions d'accès fournit lesdites informations relatives à un environnement local du terminal complétées avec lesdites informations relatives à une session d'accès du terminal.

Ainsi, le serveur de sessions obtient simultanément des informations de session et des informations d'environnement local en réutilisant les interfaces de communication existantes. L'ensemble de ces informations permettent de caractériser plus précisément l'environnement du terminal.

Selon une autre caractéristique de la présente invention, avant de fournir au serveur de sessions d'accès les informations relatives à un environnement local, le serveur d'auto-configuration sélectionne les informations relatives à un environnement local du terminal à fournir au serveur de sessions d'accès en fonction du service adapté à fournir.

La sélection des informations pertinentes au niveau du serveur d'autoconfiguration permet d'optimiser l'utilisation de la bande passante en limitant la quantité d'informations transitant à travers le réseau d'accès.

Selon une autre caractéristique de la présente invention, les informations relatives à un environnement local du terminal comprennent des informations relatives à des bornes d'accès au réseau d'accès voisines du terminal et le procédé de fourniture de service comprend la sélection d'une borne d'accès parmi lesdites bornes d'accès en fonction du service adapté à fournir.

Ceci est particulièrement avantageux pour déterminer une borne d'accès adaptée dans le cadre de la gestion d'un service de handover.

La présente invention vise également un procédé mis en oeuvre par un serveur d'auto-configuration, caractérisé en ce qu'il comprend :
- la réception par ledit serveur d'auto-configuration d'une requête d'interrogation en provenance d'un serveur de sessions d'accès pour obtenir des informations relatives à un environnement local d'un terminal appartenant à un réseau local ; et
- la fourniture par ledit serveur d'auto-configuration desdites informations audit serveur de sessions d'accès, en réponse à ladite requête.

Selon une caractéristique de la présente invention, le procédé mis en oeuvre par le serveur d'auto-configuration comprend en outre une sélection par ledit serveur d'auto-configuration des informations relatives à un environnement local du terminal à fournir au serveur de sessions d'accès en fonction d'un service à fournir au terminal par un serveur d'application.

Selon une autre caractéristique, les informations relatives à un environnement local du terminal comprennent des informations relatives à des bornes d'accès au réseau d'accès voisines du terminal et le procédé mis en oeuvre par le serveur d'autoconfiguration comprend la sélection d'une borne d'accès parmi lesdites bornes d'accès en fonction du service adapté à fournir.

Selon une caractéristique de la présente invention, le procédé d'obtention comprend en outre l'envoi par le serveur de session d'accès au serveur d'application desdites informations relatives à une session d'accès du terminal conjointement avec les informations relatives à un environnement local du terminal.

La présente invention vise également un serveur d'auto-configuration comprenant des moyens pour obtenir des informations relatives à un environnement local d'un terminal. Le serveur d'auto-configuration selon l'invention comprend en outre des moyens de réception d'une requête d'interrogation en provenance d'un serveur de sessions d'accès et des moyens pour fournir lesdites informations relatives à un environnement local du terminal audit serveur de sessions d'accès, en réponse à ladite requête d'interrogation.

Conformément à la présente invention, le serveur d'auto-configuration est ainsi adapté à fournir des informations d'environnement relatives à un environnement local du terminal sur un réseau à local à une entité tierce. De manière avantageuse, la véracité des informations est garantie par l'opérateur ou le fournisseur de services à qui appartient le serveur d'auto-configuration.

Selon une caractéristique de la présente invention, le serveur d'autoconfiguration comprend en outre des moyens pour sélectionner, en fonction du service à fournir, les informations relatives à un environnement local du terminal à fournir au serveur de sessions d'accès.

La présente invention vise également un serveur de sessions d'accès, adapté à fournir des informations relatives à une session d'accès à un réseau d'accès d'un terminal appartenant à un réseau local, caractérisé en ce qu'il comprend des moyens pour, sur réception d'une requête d'informations relatives au terminal en provenance d'un serveur d'application, obtenir par interrogation d'un serveur d'auto-configuration des informations relatives à un environnement local du terminal et pour fournir ces informations audit serveur d'application.

De manière avantageuse, le serveur de sessions d'accès obtient les informations d'environnement local auprès du serveur d'auto-configuration, de manière fiable et simple en réutilisant les interfaces de communication existantes.

Selon une caractéristique de la présente invention, le serveur de sessions d'accès comprend en outre des moyens pour envoyer au serveur d'application des informations relatives à une session d'accès conjointement avec les informations d'environnement relatives à un environnement local du terminal.

L'invention vise également un système comprenant un terminal appartenant à un réseau local, un serveur d'auto-configuration et un serveur de sessions d'accès tels que décrits précédemment et un serveur d'application apte à fournir des services audit terminal, ledit serveur d'application comprenant :
- des moyens pour envoyer une requête d'informations relatives à un terminal audit serveur de sessions d'accès ; et
- des moyens pour fournir audit terminal au moins un service adapté en fonction à la fois des informations relatives à une session d'accès du terminal et des informations relatives à un environnement local du terminal.

Ainsi, le serveur d'application obtient simultanément de manière simple et garantie les informations de session et les informations d'environnement local. Ces informations permettent au serveur d'application de personnaliser le service proposé en tenant compte non seulement du réseau d'accès mais également du réseau local.

Le fait que le serveur d'application obtienne les informations d'environnement local auprès du serveur d'auto-configuration permet de garantir la véracité de celles-ci, dans la mesure où ces informations sont maintenues au niveau du serveur d'autoconfiguration qui est sous le contrôle d'un opérateur ou d'un fournisseur de services. Ceci permet d'éviter à un terminal de fournir ses propres informations d'environnement local directement au serveur d'application, informations qu'il aurait pu falsifier.

Par ailleurs, l'obtention des informations d'environnement par l'intermédiaire du serveur de sessions d'accès est simple à mettre en oeuvre, dans la mesure où elle permet l'utilisation d'interfaces de communication existantes.

La présente invention vise également un programme d'ordinateur comprenant des instructions pour la mise en oeuvre des étapes du procédé mis en oeuvre par un serveur d'auto-configuration selon invention tel que décrit ci-avant, lorsque ledit programme est exécuté par un ordinateur.

La présente invention vise également un programme d'ordinateur comprenant des instructions pour la mise en oeuvre des étapes du procédé d'obtention par un serveur de sessions d'accès d'informations relatives à un terminal selon invention tel que décrit ci-avant, lorsque ledit programme est exécuté par un ordinateur.

Chacun des programmes d'ordinateur décrits ci-dessus peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et sur lequel sont enregistrées des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les dessins :
- la figure 1 illustre de manière schématique un système dans un mode de réalisation de la présente invention dans le cadre de la fourniture d'un service personnalisé ;
- la figure 2 illustre sous forme d'organigramme les étapes du procédé dans un mode de réalisation de la présente invention mis en oeuvre dans le cadre de la fourniture d'un service personnalisé ;
- la figure 3 illustre de manière schématique un système dans un mode de réalisation particulier de la présente invention mis en oeuvre dans le cadre de la gestion de la mobilité d'un terminal ; et
- la figure 4 illustre sous forme d'organigramme les étapes du procédé dans un mode de réalisation particulier de la présente invention mis en oeuvre dans le cadre de la gestion de la mobilité d'un terminal.

### Description détaillée d'un mode de réalisation

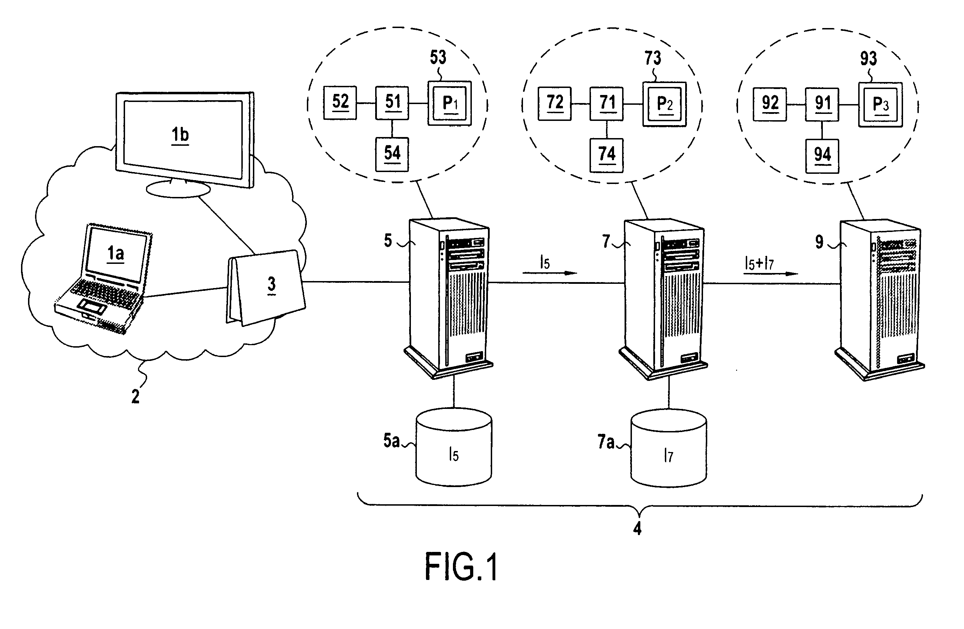

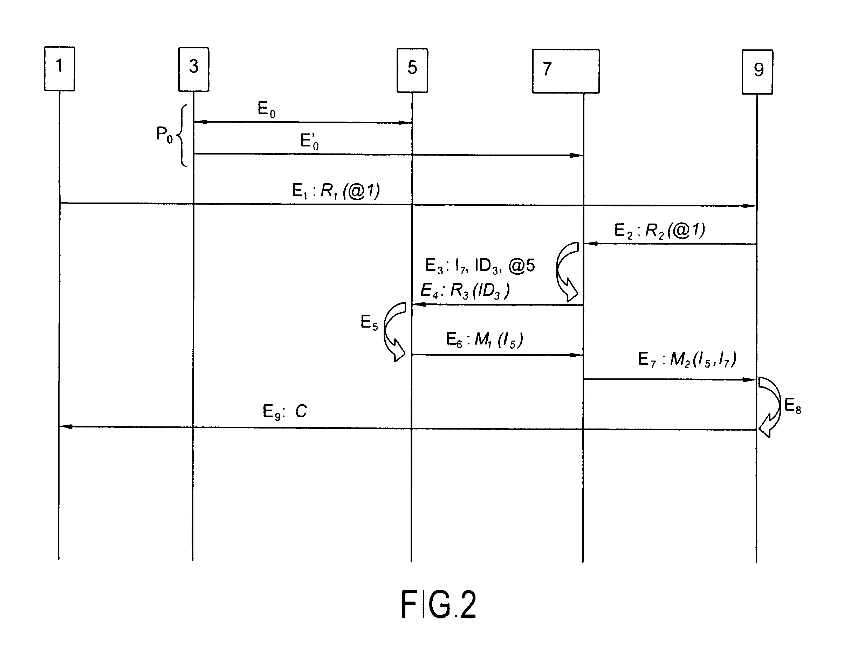

Un mode de réalisation de la présente invention va être maintenant décrit de manière détaillée en référence aux figures 1 et 2, dans le cadre de la fourniture d'un service personnalisé à un utilisateur d'équipements sur un réseau domestique 2 (réseau local) depuis un réseau d'accès 4.

Comme illustré sur la figure 1, le réseau domestique 2 comprend un terminal 1a (ordinateur portable) et un écran à haute définition 1b. Chacun de ces équipements 1a, 1b est connecté à une passerelle domestique 3 (CNG « Customer Network Gateway ») qui est le point central du réseau domestique.

Comme illustré sur la figure 1, le réseau d'accès 4 comprend :
- un serveur d'auto-configuration 5 associé à une base de données 5a, dans laquelle sont maintenues des informations I₅ relatives au réseau domestique 2 auquel appartient le terminal 1a ;
- un serveur de sessions d'accès 7 au réseau d'accès 4, ledit serveur 7 étant associé à une base de données 7a, dans laquelle sont maintenues des informations de sessions I₇ relatives à une session d'accès du terminal 1a auprès du réseau d'accès 4 ; et
- un serveur d'application 9 apte à fournir un service au terminal sur le réseau domestique 2, ce service étant adapté en fonction d'informations reçues du serveur de sessions d'accès 7.

Une interface de communication est prévue entre le serveur d'autoconfiguration 5 et le serveur de sessions 7 pour permettre notamment au serveur de sessions 7 d'obtenir auprès du serveur d'auto-configuration 5 les informations I₅ relatives au réseau domestique 2 conformément à la présente invention.

Les étapes du procédé de fourniture du service personnalisé en fonction des informations d'environnement local I₅ et des informations de sessions I₇ vont être maintenant décrites de manière détaillée en référence à la figure 2.

Lors d'une phase préalable de configuration P₀, les équipements 1a, 3 du réseau domestique 2 sont configurés par le serveur d'auto-configuration 5. En particulier, la passerelle domestique 3 est configurée (étape E₀) par le serveur d'auto-configuration 5 et identifiée auprès du serveur de sessions d'accès 7 (étape E'₀).

De préférence, le protocole utilisé pour permettre au serveur d'autoconfiguration 5 de configurer les équipements du réseau domestique 2 est le protocole TR-069 (« CPE WAN Management Protocol »). Pour la configuration d'équipements utilisant la technologie VoIP (« Voice over IP »), le protocole TR-104 (« Provisioning Parameters for VoIP CPE ») peut être utilisé.

Les paramètres de configuration utilisés pour configurer chaque équipement sur le réseau domestique 2 sont enregistrés dans la base de données 5a gérée par le serveur d'auto-configuration 5 et constituent des informations I₅ relatives à un environnement local de l'utilisateur, au sens de la présente invention.

A titre indicatif, ces informations sont constituées par :
- le(s) type(s) d'accès disponible(s) sur le réseau domestique 2 : Wi-Fi™ (IEEE 802.11 b, g, n), Ethernet (IEEE 802.3) ;
- le type d'équipements (passerelle domestique 3, ordinateur 1a) présents sur le réseau domestique 2 et configurés par le serveur d'auto-configuration 5; et
- les équipements disponibles présents sur le réseau local mais ne nécessitant pas de configuration particulière (écran de télévision 1b, enceintes audio, microphone, écran d'ordinateur).

A titre d'exemple, les paramètres de configuration de chaque équipement 3, 1a du réseau domestique 2 et relatifs à chaque interface de communication (USB, Ethernet, Wireless) sont enregistrés dans la base de données 5a sous la forme suivante :
● « Software/firmware image management » de chaque équipement,
● « Status and performance monitoring », et
● « Diagnostics ».

Les données sont enregistrées sous forme d'un objet. Par exemple, l'objet *InternetGatewayDevice.LANDevice.{i}.WLAN-Configuration.{i}* contient les informations suivantes :
*Enable; Status; BSSID; SSID; MaxBitRate; Channel; BeaconType; MACAddressContro*/*Enabled; Standard; WEPKeyIndex; KeyPassphrase; WEPEncryptionLevel; BasicEncryptionModes; BasitAuthenticationMode; WPAEncryptionModes; WPAAuthenticationMode;IEEE11iEncryptionModes; IEEE11iAuthenticationMode; PossibleChannels; BasicDataTransmitRates; Operationa*/*DataTransmitRates; PossibleDataTransmitRates; InsecureOOBAccessEnabled, BeaconAdvertisementEnabled; RadioEnabled; AutoRateFallBackEnabled ; LocationDescription; RegulatoryDomain; TotalPSKFailures, TotalIntegrityFailures; ChannelsInUse; DeviceOperationMode; DistanceFromRoot; PeerBSSID; AuthenticationServiceMode; TotalBytesSent; TotalBytesReceived; TotalPacketsSent; TotalPacketsReceived; TotalAssociations.*

Les informations de sessions I₇ sont stockées dans la base de données 7a gérée par le serveur de sessions 7, de sorte que la validité de ces informations soit garantie par l'opérateur du réseau d'accès 4 qui contrôle le serveur de sessions 7.

De manière connue, les informations de sessions I₇ sont utilisées pour identifier l'accès au réseau d'accès 4 et construire une configuration adaptée à l'environnement de l'utilisateur du terminal 1a.

A titre indicatif, les informations de sessions I₇ comprennent par exemple :
- l'identifiant du client associé à une ligne d'accès (« Subscriber ID ») ;
- identifiant de la ligne d'accès ou identifiant d'accès logique ;
- le type du réseau d'accès (ATM, Ethernet, Wi-Fi, xDSL, FTTH) ;
- le type de terminal (voix, vidéo, PC) ; et
- l'adresse IP publique (« IP Edge Identity ») utilisée par la passerelle domestique 3 ou l'adresse publique utilisée par les terminaux utilisateurs sur le réseau domestique 2.

D'autres informations telles que la localisation géographique du réseau domestique 2 (« Physical Access ID » ; « Address Realm »), le type d'accès physique (ADSL : « Asynchronous Digital Subscriber Line », FTTH : « Fiber To The Home ») et le débit (montant, descendant) de la ligne physique utilisée par le terminal 1a /passerelle domestique 3 peuvent être comprises dans les informations de sessions I₇.

Dès lors que des modifications de la configuration d'un équipement appartenant au réseau domestique 2 sont réalisées par un administrateur de l'équipement ou par une mise à jour de la couche logicielle effectuée par le réseau d'accès, celles-ci sont transmises automatiquement au serveur d'auto-configuration 5 selon le protocole TR-069 et/ou TR-104.

On suppose qu'un utilisateur du terminal 1a souhaite accéder à un service de réception d'un flux vidéo adapté à l'environnement dans lequel il se trouve. Par exemple, ce service permet à l'utilisateur de visualiser un flux vidéo HD (« High Definition ») sur un terminal ou périphérique adéquat du réseau domestique 2.

A cet effet, le terminal 1a émet, lors d'une étape d'envoi E₁, une requête de service R₁ à destination du serveur d'application 9. La requête de service R₁ comprend l'adresse IP (@1) du terminal 1a, permettant l'identification de celui-ci.

Dans l'exemple de réalisation illustré sur la figure 2, la passerelle domestique 3 intègre les fonctionnalités d'un modem pont. Un tel modem pont a la particularité de laisser passer toutes les requêtes dans le réseau d'accès 4, sans les modifier. Dans ce cas, le réseau d'accès 4 a une visibilité directe sur les équipements du réseau domestique 2.

Dans un autre exemple de réalisation non illustré, la passerelle domestique 3 intègre les fonctionnalités d'un modem routeur. L'utilisation d'un modem routeur implique que le réseau d'accès 4 n'a pas connaissance des équipements connectés sur le réseau domestique 2. Dans ce cas, seul le serveur d'auto-configuration 5 a connaissance des équipements connectés sur le réseau domestique 2. Dans cette variante de réalisation, à réception de la requête de service R₁, la passerelle domestique 3 substitue à l'adresse IP (@1) du terminal 1a sa propre adresse IP publique (@3) dans la requête de service pour communiquer avec le serveur d'application 9.

Sur réception de la requête de service R₁, le serveur d'application 9 envoie au serveur de sessions 7 une requête d'informations R₂ comprenant l'adresse IP (@1) du terminal la qui est à l'origine de la demande de service (ou en variante l'adresse IP (@3) de la passerelle domestique 3 si celle-ci a substitué sa propre adresse à celle du terminal dans la requête de service R₁).

Conformément à la présente invention, cette requête d'informations R₂ est prévue pour permettre au serveur d'application 9 d'obtenir des informations d'environnement I₅ relatives au réseau domestique 2 auquel appartient le terminal 1a. Cette requête R₂ permet également d'obtenir par la même occasion les informations de sessions I₇ relatives à la session d'accès du terminal 1a au réseau d'accès 4.

Sur réception de la requête d'informations R₂, le serveur de sessions 7 obtient, lors d'une étape d'obtention E₃, les informations de sessions I₇ relatives à la session d'accès associée à l'adresse @1 du terminal 1a (ou en variante, à l'adresse @3 de la passerelle domestique 3). Ces informations de sessions I₇ sont extraites de la base de données 7a associée au serveur de sessions 7. Ainsi, l'obtention des informations I₇ relatives à une session d'accès du terminal est réalisée par interrogation du serveur de sessions d'accès 7.

Lors de cette même étape d'obtention E₃, le serveur de sessions d'accès 7 obtient l'adresse IP (@5) du serveur d'auto-configuration 5 ayant configuré le terminal 1a sur le réseau domestique 2, ainsi que l'identifiant ID₃ de la passerelle domestique 3 dont dépend le terminal 1a.

À partir de l'adresse publique du réseau domestique 2, le serveur de sessions 7 connaît l'identifiant ID3 de la passerelle domestique 3, ainsi que l'adresse @5 du serveur d'auto-configuration 5. Ces données sont mémorisées en relation dans le serveur de sessions d'accès 7.

Dans le cas où la passerelle domestique est un modem pont, le serveur de sessions d'accès 7 a besoin de l'adresse IP publique @1 du terminal 1a pour obtenir l'adresse @5 du serveur d'auto-configuration et l'identifiant ID3 de la passerelle domestique 3. La passerelle domestique 3 étant connectée sur la même ligne que le terminal 1a, il suffit de récupérer l'adresse IP d'un équipement de type « passerelle domestique » connecté sur la même ligne que le terminal 1a. Le serveur de sessions d'accès 7 a la connaissance de tous les types d'équipements connectés sur une ligne dès lors qu'il obtient une adresse publique. Le serveur de sessions d'accès 7 permet de retrouver la localisation géographique du réseau d'un terminal.

Dans le cas où la passerelle domestique est un modem routeur, lors de la procédure de recherche de la passerelle domestique, le serveur de sessions d'accès 7 retourne l'adresse IP publique @3 de la passerelle 3 identique à celle figurant dans la requête de service R₁.

L'adresse @5 permet d'interroger le serveur d'auto-configuration 5 pour récupérer des informations sur l'environnement local. L'adresse @5 est enregistrée au niveau du serveur de sessions d'accès 7 en association avec une adresse IP publique de chaque terminal (terminal ou passerelle, selon que cette dernière joue le rôle de modem pont ou de modem routeur) lors de l'attribution d'adresse IP publique des équipements du réseau d'accès. Le serveur de sessions d'accès 7 mémorise des couples (@IP publique, @5), permettant, pour chaque équipement (terminal ou passerelle) de connaître le serveur d'auto-configuration 5 auquel il est rattaché. L'adresse IP publique est celle du terminal si la passerelle est transparente ou celle de la passerelle si le terminal n'est pas visible depuis le réseau d'accès.

Conformément à la présente invention, le serveur de sessions 7 complète les informations de sessions I₇ par des informations d'environnement I₅ relatives au réseau local qu'il obtient auprès du serveur d'auto-configuration 5 responsable de la configuration du réseau local 2 comme décrit ci-dessous.

Pour cela, le serveur de sessions 7 envoie au serveur d'auto-configuration 5, lors d'une étape E₄, une requête d'informations R₃ à l'adresse IP (@5) du serveur d'autoconfiguration 5 comprenant l'identifiant ID₃ de la passerelle domestique 3 déterminé lors de l'étape d'obtention E₃ précédente.

Sur réception de la requête d'informations R₃, le serveur d'auto-configuration 5 extrait (étape E₅) de la base de données 5a associée, les informations d'environnement I₅ relatives au réseau domestique 2.

Lors de cette même étape E₅, le serveur d'auto-configuration 5 sélectionne les informations relatives à un environnement local du terminal à fournir au serveur de sessions d'accès 7, en fonction du service adapté à fournir.

Comme décrit ci-avant, les informations d'environnement I₅ concernent la configuration du réseau domestique 2 et plus particulièrement la configuration de connexion de la passerelle domestique 3 (type d'accès disponible, type de terminaux connectés et configurés par le serveur d'auto-configuration 5).

Selon une variante de réalisation, toutes les informations d'environnement I₅ relatives au réseau domestique 2 ne sont pas stockées dans la base de données 5a. Ceci est particulièrement avantageux lorsque la quantité totale d'informations à stocker est élevée en raison du nombre élevé de clients à gérer. Dans ce cas, le serveur d'autoconfiguration 5 obtient à la volée (en réponse à la requête d information R₃) des informations d'environnement local spécifiques au réseau domestique 2 auprès de la passerelle domestique 3 et/ou des équipements connectés à la passerelle 3. De telles informations peuvent être obtenues par le serveur d'auto-configuration 5 en utilisant les commandes ci-dessous prévues par le protocole TR069 :
« GetParameterValues » permet d'obtenir la valeur d'un paramètre;
« GetParameterNames » permet de connaître le nom des paramètres que le serveur d'auto-configuration 5 peut récupérer;
« GetParameterAttributes » permet de connaître l'ensemble des arguments d'un paramètre.

Ces différentes méthodes permettent ensuite de récupérer les informations suivantes citées ci-dessous à titre d'exemple :
*« LANDeviceNumberOfEntries »* permet de savoir combien de terminaux (CND) sont connectés à la passerelle domestique 3 (CNG). *« InternetGatewayDevice.LANDevice.{i}»* permet de connaître le nombre de terminaux connectés sur le réseau domestique LAN {i} de la passerelle domestique 3 pour les technologies WLAN, Ethernet et USB.
*«InternetGatewayDevice.LANDevice.{j}.LAN-EthernetInterfaceConfig.{i}»* permet de connaître les caractéristiques de l'interface {i} du réseau domestique 2 (LAN) {j} avec un terminal (CPE). De telles informations peuvent être utilisées par le serveur d'application 9 pour connaître le type de connectivité utilisé par un terminal et ainsi permettre de vérifier que le terminal est bien connecté à la passerelle domestique 3 ou que la ligne d'accès du réseau n'est pas saturée.
*« InternetGatewayDevice.LANDevice.{i}.WLAN-Configuration.{i}.* » permet de connaître la configuration Wifi de la passerelle domestique 3 ou des terminaux présents sur le réseau domestique 2. Ces informations peuvent être avantageusement utilisées par le serveur d'application 9, par exemple dans le cadre de la gestion d'un procédé de « handover ».

De manière similaire, le protocole TR-104 peut être utilisé dans le cadre de la gestion de services VoIP, pour permettre au serveur d'auto-configuration 5 d'obtenir des informations spécifiques auprès de terminaux VoIP. Par exemple :
*« VoiceService.{i}.Capabilities »* permet de savoir si un appel de type voix peut être transféré vers un appel de type visio-conférence (voix et image) en fonction des capacités de la passerelle domestique 3 ;
*« VoiceService.{i}.Capabilities.SIP»* permet de savoir si un terminal est apte à recevoir un appel de type VoIP selon le protocole SIP « Session Initiation Protocol » et de connaître le numéro de téléphone associé à l'adresse IP du terminal ; et
*« VoiceService.{i}.Capabilities.Codecs.{i}*» permet de connaître les codecs supportés par un terminal et donc par exemple de savoir si le terminal peut recevoir un appel en visio-conférence.

Lors d'une étape d'envoi E₆, le serveur d'auto-configuration 5 envoie au serveur de sessions 7 dans un message M₁ les informations d'environnement local I₅ préalablement obtenues. Par exemple, le message M₁ comprend des paramètres relatifs aux différentes interfaces de communication disponibles au niveau de la passerelle domestique 3 du réseau domestique 2.

Sur réception des informations d'environnement local I₅ fournies par le serveur d'auto-configuration 5, le serveur de sessions d'accès 7 envoie (étape E₇) au serveur d'application 9 un message M₂ comprenant les informations d'environnement local I₅ complétées par les informations I₇ de la session d'accès du terminal.

Lors d'une étape d'adaptation E₈, le serveur d'application 9 adapte le service requis par le terminal, en fonction des informations d'environnement I₅ relatives au réseau local 2 et des informations de sessions d'accès I₇ relatives à la session en cours. Ainsi, le serveur d'application 9 peut proposer à un utilisateur un service adapté en fonction de son accès au réseau d'accès 4 et de son accès au réseau domestique 2.

Lors d'une étape d'activation E₉, le serveur d'application 9 active le service adapté en fonction de ces deux types d'informations, en envoyant une commande C au terminal la via la passerelle domestique 3.

Sur réception de cette commande C, l'utilisateur du terminal peut bénéficier du service adapté.

Dans le cadre du service décrit ci-dessus, la commande C permet par exemple d'activer l'écran 1b pour recevoir un flux vidéo haute définition, plutôt que de recevoir ce même flux vidéo sur l'ordinateur portable 1a qui n'est pas adapté à ce service.

### Autre mode de réalisation

Un autre mode de réalisation de la présente invention va être maintenant décrit de manière détaillée, dans le cadre de la gestion de la mobilité d'un terminal mobile 10 à partir d'un réseau d'accès 4 comprenant un serveur d'auto-configuration 5, un serveur de sessions d'accès 7 et un serveur d'application 9.

Le service considéré est la gestion d'un procédé de « handover », en prenant en compte des informations d'environnement local obtenues conformément à la présente invention.

Dans cet exemple, le terminal mobile 10 est un téléphone Wifi ™ apte à communiquer selon le protocole IEEE 802.11. Ce téléphone 10 est initialement connecté à une première borne d'accès sans fil 30a associée à un premier réseau local 20a et se trouve à portée de deux autres bornes d'accès sans fil voisines 30b, 30c. Chacune des bornes d'accès 30a, 30b, 30c définit un réseau local noté respectivement 20a, 20b, 20c délimité par le domaine de portée radio de la borne d'accès correspondante 30a, 30b, 30c.

Le terminal 10 et les trois bornes d'accès 30a, 30b, 30c sont aptes à communiquer avec le serveur d'auto-configuration 5 et le serveur d'application 9 selon l'invention comme décrit précédemment.

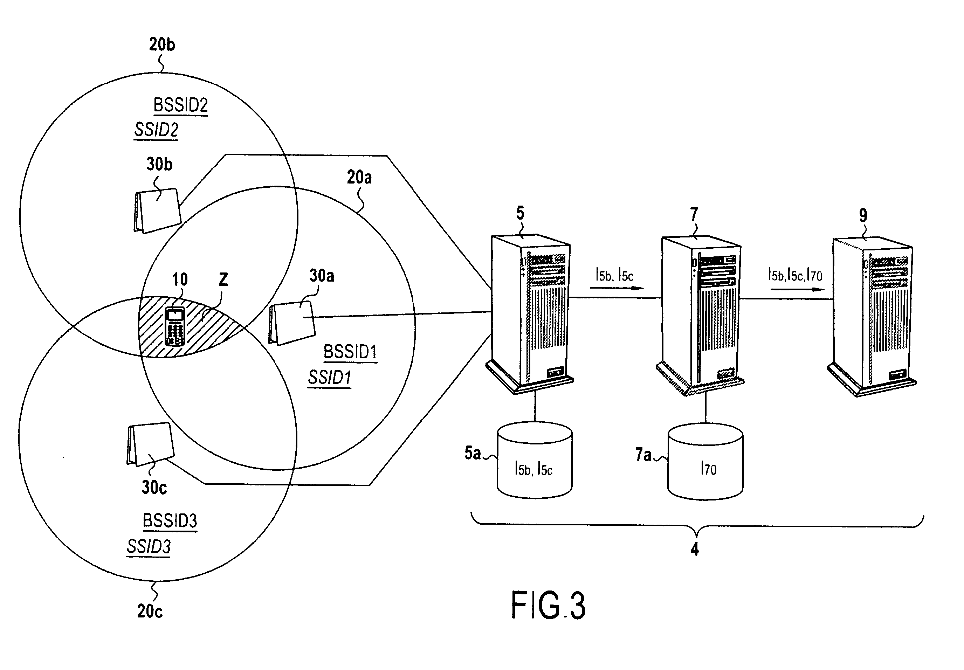

Comme illustré sur la figure 3, on considère qu'à un instant donné, le terminal mobile 10 se trouve dans une zone de recouvrement Z définie par l'intersection des zones de couverture des trois réseaux locaux 20a, 20b, 20c.

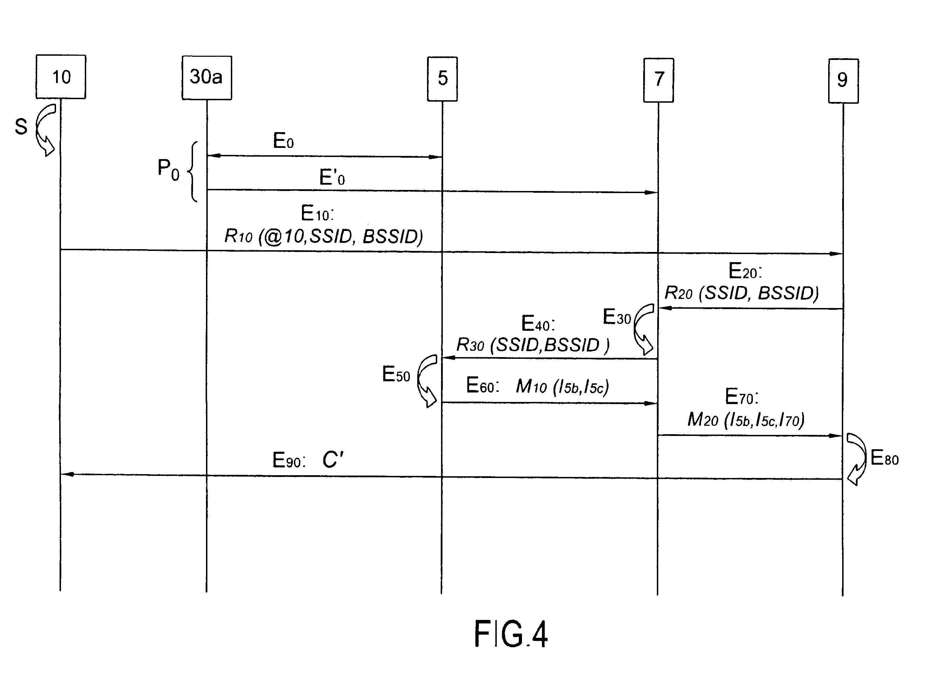

Le procédé selon l'invention va être maintenant décrit de manière détaillée en référence à la figure 4 dans le cadre de la gestion de la mobilité ou handover.

Lors d'une phase de configuration P₀ déjà décrite ci-avant, chaque borne d'accès sans fil 30a, 30b, 30c est configurée par le serveur d'auto-configuration 5 et identifiée auprès du serveur de sessions d'accès 7.

L'accès au réseau d'accès 4 par le terminal 10 est identifié auprès du serveur de sessions d'accès 7 en utilisant notamment l'adresse IP publique (@10) du terminal 10, ou en variante l'adresse IP publique (@30a) de la borne d'accès 30a.

Lors d'une étape d'envoi E₁₀, le terminal 10 envoie au serveur d'application 9 une requête de service R₁₀ comprenant :
- l'adresse IP (@10) du terminal mobile 10 permettant son identification;
- un identifiant SSID1 (SSID ou ESSID : « Extended Service Set Identifier ») de la borne d'accès sans fil 30a auquel le terminal 10 est connecté et l'identifiant BSSID1 (BSSID : « Basic Service Set Identifier »), cet identifiant étant constitué par l'adresse MAC (« Medium Access Control ») de cette borne d'accès 30a ; et
- des informations relatives aux bornes d'accès voisines 30b, 30c se trouvant à portée radio du terminal mobile 10, ces informations étant présentées sous la forme d'une liste d'identifiants SSID (SSID2, SSID3), et d'identifiants BSSID (BSSID2, BSSID3). Chaque identifiant BSSID correspond à l'adresse MAC de la borne d'accès associée.

Les identifiants SSID des bornes d'accès voisines (SSID2, SSID3) sont obtenus par le terminal mobile 10 lors d'une étape de scan S préalable. De manière alternative, la borne d'accès 30a dont dépend initialement le terminal 10 est adaptée pour déterminer elle-même les bornes d'accès voisines 30b, 30c qui sont disponibles. Les informations relatives aux bornes d'accès voisines 30b, 30c ainsi obtenues peuvent être avantageusement utilisées lors de la configuration de la borne 30a par le serveur d'autoconfiguration 5, par exemple pour sélectionner un canal de transmission qui ne sera pas perturbé par les bornes d'accès voisines. Dans ce cas, le serveur d'auto-configuration 5 peut fournir directement -les identifiants des bornes d'accès voisines au serveur d'application 9, en évitant au terminal 10 d'effectuer un scan pour détecter les bornes d'accès disponibles.

Dans l'exemple de la figure 3, le terminal 10 sur le réseau local 20a détecte deux bornes d'accès 30b, 30c voisines. Par conséquent, le terminal 10 fournit dans la requête de service R₁₀ son adresse IP publique @10 et les informations relatives aux bornes d'accès voisines 30b, 30c, ces informations étant constituées par leur identifiant respectif SSID2, SSID3 associé à leur adresse MAC respective BSSID2, BSSID3. Dans le cas où la borne d'accès 30a est un modem routeur, l'adresse @30a de la borne d'accès à laquelle le terminal 10 est connecté est fournie dans la requête de service R₁₀.

Sur réception de la requête de service R₁₀, le serveur d'application 9 envoie (étape E₂₀) au serveur de sessions 7, une requête d'informations R₂₀ comprenant la liste d'identifiants {SSID, BSSID} des bornes d'accès voisines 30b, 30c et l'adresse IP publique @10 utilisée par le terminal 10 pour se connecter à la borne d'accès 30a.

Sur réception de la requête d'informations R₂₀, le serveur de sessions 7 vérifie que le serveur d'application 9 est autorisé à recevoir ou récupérer des informations.

Dans l'affirmative, le serveur de sessions 7 obtient (étape d'obtention E₃₀) des informations de sessions I₇ relatives à la session d'accès du terminal 10 au réseau d'accès 4. Ces informations de sessions I₇ sont extraites de la base de données 7a associée au serveur de sessions 7. Il s'agit par exemple d'informations telles que la localisation géographique du réseau domestique 20a, le type d'accès et le débit (montant, descendant) de l'accès radio utilisé par le terminal 10.

N'ayant pas connaissance des identifiants {SSID, BSSID} contenus dans la requête d'informations R₂₀, le serveur de sessions 7 transfère ceux-ci (étape E₄₀) au serveur d'auto-configuration 5 dans une requête R₃₀.

Sur réception de la requête R₃₀, le serveur d'auto-configuration 5 détermine (étape E₅₀) à partir des identifiants (SSID2, BSSID2 ; SSID3, BSSID3) fournis dans cette requête R₃₀ les environnements d'accès radio correspondants.

Pour cela, le serveur d'auto-configuration 5 extrait (étape E₅₀) de la base de données 5a, pour chaque borne d'accès 30b, 30c identifiée dans la requête R₃₀ des informations d'environnement local I_{5b}, I_{5c} relatives à la connectivité radio disponible au niveau des bornes d'accès voisines 30b, 30c. Ces informations concernent la configuration du réseau local 20b, 20c de chaque borne d'accès 30b, 30c et plus particulièrement les paramètres de configuration de la connexion radio (protocole utilisé : IEEE 802.11 a/b/g/n, exemple type d'authentification (WEP), clé WEP à utiliser, canal à utiliser, bande passante disponible, nombre de terminaux déjà connectés).

Selon une variante de réalisation, sur réception de la requête R₃₀, le serveur d'auto-configuration 5 est adapté à obtenir directement (étape non représentée) auprès des bornes d'accès 30b, 30c les informations d'environnement local I_{5b}, I_{5c} requises.

De manière avantageuse, le serveur d'auto-configuration 5 peut être adapté pour sélectionner lors de cette même étape E₅₀, les informations d'environnement local pertinentes I_{5b} qui concernent uniquement les SSID appartenant à un domaine de souscription de l'utilisateur et acceptant les utilisateurs nomades. En particulier, le serveur d'auto-configuration 5 peut être adapté à sélectionner une borne d'accès parmi les bornes d'accès voisines en fonction du service adapté (handover) à fournir au terminal.

Lors d'une étape d'envoi E₆₀, le serveur d'auto-configuration 5 envoie dans un message M₁₀ les informations d'environnement local I_{5b} pertinentes au serveur de sessions d'accès 7.

On notera que la sélection des informations d'environnement local pertinentes au niveau du serveur d'auto-configuration 5 permet de minimiser la quantité d'informations transmises au serveur de sessions 7 et ainsi d'optimiser l'utilisation de la bande passante au sein du réseau d'accès 4.

Sur réception des informations d'environnement local I_{5b}, I_{5c} fournies par le serveur d'auto-configuration 5, le serveur de sessions d'accès 7 envoie (étape E₇₀) au serveur d'application 9 un message M₂₀ comprenant les informations d'environnement local I_{5b}, I_{5c} et les informations de session d'accès I₇₀.

Lors d'une étape de sélection E₈₀, le serveur d'application 9 sélectionne parmi l'ensemble des bornes d'accès voisines identifiées 30b, 30c celle(s) dont les informations d'environnement local I_{5b}, I_{5c} sont compatibles avec les informations de sessions I₇₀ de l'utilisateur. Le serveur d'application 9 sélectionne une borne d'accès 20b susceptible d'assurer l'itinérance (Roaming ou Handover) du terminal 10, lorsque celui-ci s'apprête à quitter l'espace de couverture du réseau local 20a auquel il est initialement connecté.

Pour cela, le serveur d'application 9 élimine les bornes d'accès qui ne sont pas aptes à supporter les demandes de connexion des services activés sur le terminal de l'utilisateur 10, en vérifiant leur connectivité réseau et en vérifiant que les clients des bornes d'accès acceptent les utilisateurs nomades, les bornes d'accès sont connectées au réseau d'accès 4, la bande passante nécessaire pour continuer le service non disponible, le débit disponible sur les accès identifiés par les identifiants SSID, le débit disponible dans le réseau d'accès 4 jusqu'à chaque borne.

En résumé, à partir des identifiants SSID des bornes d'accès localisées dans le domaine de portée radio du terminal 10, le serveur d'application 9 situé sur le réseau d'accès 4, obtient des informations d'environnement WAN et LAN de ces bornes. En fonction de ces deux types d'informations, le serveur d'application 9 peut réaliser la gestion du handover en cas de mobilité du terminal 10.

Le serveur d'auto-configuration 5 selon l'invention a l'architecture conventionnelle d'un ordinateur. Il comporte notamment un processeur 50, une mémoire vive de type RAM 52 et une mémoire morte de type ROM 53 comme représenté sur la figure 3.

La mémoire morte 53 constitue un support d'enregistrement 53 selon l'invention, sur lequel est mémorisé un programme d'ordinateur P₁ conforme à l'invention. Ce programme P₁ comporte des instructions pour l'exécution des étapes d'extraction E₅, E₅₀ et d'envoi E₆, E₆₀ des informations d'environnement local I₅, I_{5b}, I_{5c} du procédé selon l'invention, ces étapes ayant été décrites ci-dessus en référence aux figures 2 et 4. La mémoire vive 52 est utilisée par le processeur 51 pour l'exécution du programme d'ordinateur P₁ selon l'invention.

Le serveur d'auto-configuration 5 comporte aussi des moyens de communication 54 aptes à communiquer d'une part avec la passerelle domestique 3, les bornes d'accès sans fil 20a, 20b, 20c, les terminaux 1a, 10 et d'autre part avec le serveur de sessions 7.

Le serveur de sessions 7 selon l'invention a l'architecture conventionnelle d'un ordinateur. Il comporte notamment un processeur 70, une mémoire vive de type RAM 72 et une mémoire morte de type ROM 73, comme représenté sur la figure 3.

La mémoire morte 73 constitue un support d'enregistrement 73 selon l'invention, sur lequel est mémorisé un programme d'ordinateur P₂ conforme à l'invention. Ce programme P₂ comporte des instructions pour l'exécution des étapes d'interrogation E₄, E₄₀ pour obtenir les informations d'environnement local I₅, I_{5b}, I_{5c} auprès du serveur d'auto-configuration 5, les étapes d'obtention E₃, E₃₀ des informations de sessions et les étapes d'envoi E₇, E₇₀ de ces informations au serveur d'application 9 du procédé selon l'invention décrites ci-dessus en référence aux figures 2 et 4. La mémoire vive 72 est utilisée par le processeur 71 pour l'exécution du programme d'ordinateur P₂ selon l'invention.

Le serveur de sessions 7 comporte aussi des moyens de communication 74 aptes à communiquer d'une part avec le serveur d'auto-configuration 5 et d'autre part avec le serveur d'application 9.

Le serveur d'application 9 selon l'invention a l'architecture conventionnelle d'un ordinateur. Il comporte notamment un processeur 90, une mémoire vive de type RAM 92 et une mémoire morte de type ROM 93, comme représenté sur la figure 3.

La mémoire morte 93 constitue un support d'enregistrement 93 selon l'invention, sur lequel est mémorisé un programme d'ordinateur P₃ conforme à l'invention. Ce programme P₃ comporte des instructions pour l'exécution des étapes d'envoi E₂, E₂₀, des étapes E₇, E₇₀ de réception des informations d'environnement local I₅, I_{5b}, I_{5c} et des informations de sessions I₇, I₇₀, les étapes d'adaptation E₈, E₈₀ et d'envoi E₉, E₉₀ telles que décrites ci-dessus en référence aux figures 2 et 4. La mémoire vive 92 est utilisée par le processeur 91 pour l'exécution du programme d'ordinateur P₃ selon l'invention.

Le serveur d'application 9 comporte aussi des moyens de communication 94 aptes à communiquer d'une part avec les terminaux 1a, 10 et d'autre part avec le serveur de sessions 7.

## Revendications

1. Procédé d'obtention, par un serveur de sessions d'accès (7) d'un réseau d'accès (4), d'informations (I₅; I_{5b}, I_{5c}) relatives à un terminal (1a ; 10) appartenant à un réseau local (2 ; 20a, 20b, 20c) comprenant au moins le terminal (1a, 10) et un dispositif d'accès (3 ; 30a, 30b, 30c) au réseau d'accès (4), ledit serveur de sessions d'accès (7) étant adapté à fournir des informations (I₇; I₇₀) relatives à une session d'accès du terminal au réseau d'accès (4),
ledit procédé d'obtention étant tel qu'il comprend, sur réception d'une requête (R₂ ; R₂₀) d'informations relatives au terminal en provenance d'un serveur d'application (9) :
l'envoi d'une requête d'interrogation (R₃, R₃₀) incluant l'identifiant du dispositif d'accès (3 ; 30a, 30b, 30c) dudit réseau local vers un serveur d'autoconfiguration (5) apte à configurer au moins un équipement dudit réseau local (2 ; 20a, 20b, 20c),
en réponse à ladite requête d'interrogation (R₃, R₃₀), la réception d'un message (M₁, M₁₀) du serveur d'auto-configuration (5), ledit message (M₁, M₁₀) incluant des informations (I₅; I_{5b}, I_{5c}) relatives à un environnement local dudit terminal (1a ; 10), lesdites informations (I₅; I_{5b}, I_{5c}) relatives à un environnement local dudit terminal (1a ; 10) comprenant les paramètres de configuration pour au moins un équipement dudit réseau local, et la fourniture desdites informations au serveur d'application (9).

2. Procédé selon la revendication 1, **caractérisé en ce qu'**il comprend en outre l'envoi (E₇ ; E₇₀) par le serveur de session d'accès (7) au serveur d'application (9) desdites informations (I₇ ; I₇₀) relatives à une session d'accès du terminal conjointement avec les informations (I₅; I_{5b}, I_{5c}) relatives à un environnement local du terminal (1a ; 10).

3. Procédé mis en oeuvre par un serveur d'auto-configuration (5) d'un réseau d'accès (4), le serveur d'auto-configuration (5) étant apte à configurer au moins un équipement d'un réseau local (2 ; 20a, 20b, 20c) comprenant au moins un terminal (1a, 10) et un dispositif d'accès (3 ; 30a, 30b, 30c) au réseau d'accès (4), le procédé étant tel qu'il comprend :
- la réception par ledit serveur d'auto-configuration (5) d'une requête d'interrogation (R₃ ; R₃₀) incluant l'identifiant du dispositif d'accès (3 ; 30a, 30b, 30c) dudit réseau local, en provenance d'un serveur de sessions d'accès (7), pour obtenir des informations sélectionnées parmi des informations I₅ ; I_{5b}, I_{5c}) relatives à un environnement local du terminal (1a ; 10), lesdites informations (I₅; I_{5b}, I_{5c}) relatives à un environnement local dudit terminal (1a ; 10) comprenant les paramètres de configuration pour au moins un équipement dudit réseau local;
- une sélection par ledit serveur d'auto-configuration (5) des informations relatives à un environnement local du terminal à fournir au serveur de sessions d'accès (7) en fonction d'un service à fournir au terminal par un serveur d'application (9) ; et
- la fourniture (E₆ , E₇ ; E₆₀, E₇₀) par ledit serveur d'auto-configuration (5) desdites informations sélectionnées audit serveur de sessions d'accès (7), en réponse à ladite requête.

4. Procédé selon la revendication 3, **caractérisé en ce que** les informations (I₅; I_{5b}, I_{5c}) relatives à un environnement local du terminal comprennent des informations relatives à des bornes d'accès (30b, 30c) au réseau d'accès (4) voisines du terminal et **en ce que** le procédé comprend la sélection d'une borne d'accès parmi lesdites bornes d'accès en fonction du service à fournir par le serveur d'application (9).

5. Procédé de fourniture de service à un terminal (1a ; 10) appartenant à un réseau local (2 ; 20a, 20b, 20c) comprenant au moins le terminal (1a, 10) et un dispositif d'accès (3 ; 30a, 30b, 30c) à un réseau d'accès (4), le procédé comprenant :
- l'envoi d'une requête (R₂ ; R₂₀) d'informations relatives à un terminal par un serveur d'application à un serveur de sessions d'accès (7) du réseau d'accès (4) ;
- l'obtention et la fourniture par ledit serveur de sessions d'accès (7) audit serveur d'application d'informations relatives à une session d'accès du terminal à un réseau d'accès (4) ;
- l'obtention et la fourniture d'informations sélectionnées parmi des informations relatives à un environnement local du terminal audit serveur d'application (9) par ledit serveur de sessions d'accès (7) conformément à un procédé selon la revendication 1, lesdites informations étant sélectionnées par un serveur d'auto-configuration (5) en fonction d'un service à fournir ; et
- la fourniture (E₉ ; E₉₀) par ledit serveur d'application (9) audit terminal d'au moins un service adapté en fonction à la fois des informations (I₇ ; I₇₀) relatives à une session d'accès du terminal et desdites informations sélectionnées.

6. Procédé selon la revendication 5, **caractérisé en ce que** ledit serveur de sessions d'accès fournit lesdites informations sélectionnées complétées avec lesdites informations (I₇ ; I₇₀) relatives à une session d'accès du terminal.

7. Procédé selon la revendication 5, **caractérisé en ce que** les informations (I₅ ; I_{5b}, I_{5c}) relatives à un environnement local du terminal comprennent des informations relatives à des bornes d'accès (30b, 30c) au réseau d'accès (4) voisines du terminal et **en ce que** le procédé comprend la sélection d'une borne d'accès parmi lesdites bornes d'accès en fonction du service adapté à fournir.

8. Serveur de sessions d'accès (7), adapté à fournir des informations relatives à une session d'accès à un réseau d'accès d'un terminal appartenant à un réseau local (2 ; 20a, 20b, 20c) comprenant au moins le terminal (1a, 10) et un dispositif d'accès (3 ; 30a, 30b, 30c) au réseau d'accès (4), tel qu'il comprend des moyens pour, sur réception d'une requête (R₂ ; R₂₀) d'informations relatives au terminal en provenance d'un serveur d'application (9) :
envoyer une requête d'interrogation (R₃, R₃₀) incluant l'identifiant du dispositif d'accès (3 ; 30a, 30b, 30c) dudit réseau local vers un serveur d'autoconfiguration (5) apte à configurer au moins un équipement dudit réseau local (2 ; 20a, 20b, 20c),
en réponse à ladite requête d'interrogation (R₃, R₃₀), recevoir un message (M₁, M₁₀) du serveur d'auto-configuration (5), le message incluant des informations (I₅; I_{5b}, I_{5c}) relatives à un environnement local du terminal (1a ; 10), lesdites informations (I₅; I_{5b}, I_{5c}) relatives à un environnement local dudit terminal (1a ; 10) comprenant les paramètres de configuration pour au moins un équipement dudit réseau local, et
fournir ces informations audit serveur d'application (9).

9. Serveur d'auto-configuration (5) apte à configurer au moins un équipement d'un réseau local (2 ; 20a, 20b, 20c) comprenant au moins un terminal (1a, 10) et un dispositif d'accès (3 ; 30a, 30b, 30c) à un réseau d'accès (4), le serveur d'auto-configuration (5) comprenant des moyens pour obtenir des informations (I₅ ; I_{5b}, I_{5c}) relatives à un environnement local du terminal (1a ; 10), tel qu'il comprend en outre des moyens de réception d'une requête d'interrogation (R₃ ; R₃₀) incluant l'identifiant du dispositif d'accès (3 ; 30a, 30b, 30c) dudit réseau local, en provenance d'un serveur de sessions d'accès (7), pour obtenir des informations sélectionnées parmi des informations (I₅ ; I_{5b}, I_{5c}) relatives à un environnement local du terminal (1a ; 10), lesdites informations (I₅; I_{5b}, I_{5c}) relatives à un environnement local dudit terminal (1a ; 10) comprenant les paramètres de configuration pour au moins un équipement dudit réseau local, des moyens pour sélectionner des informations relatives à un environnement local du terminal à fournir au serveur de sessions d'accès (7) en fonction d'un service à fournir au terminal par un serveur d'application (9),et des moyens pour fournir les informations sélectionnées audit serveur de sessions d'accès (7), en réponse à ladite requête d'interrogation (R₃ ; R₃₀).

10. Programme d'ordinateur (P₁) comprenant des instructions pour la mise en oeuvre de toutes les étapes du procédé selon la revendication 3, lorsque ledit programme est exécuté par un ordinateur.

11. Programme d'ordinateur (P₂) comprenant des instructions pour la mise en oeuvre de toutes les étapes du procédé selon la revendication 1, lorsque ledit programme est exécuté par un ordinateur.

12. Système comprenant un terminal (1a ; 10) appartenant à un réseau local (2), un serveur d'auto-configuration (5) selon la revendication 9, un serveur de sessions d'accès (7) selon la revendication 8 et un serveur d'application (9) apte à fournir des services audit terminal (1a ; 10), ledit serveur d'application (9) comprenant :
- des moyens pour envoyer une requête d'informations relatives à un terminal (1a ; 10) audit serveur de sessions d'accès ; et
- des moyens pour fournir audit terminal au moins un service adapté en fonction à la fois des informations relatives à une session d'accès du terminal et des informations relatives à un environnement local du terminal.

## Claims

1. Method of obtaining, by an access sessions server (7) of an access network (4), information (I₅; I_{5b}, I_{5c}) relating to a terminal (1a; 10) belonging to a local network (2; 20a, 20b, 20c) comprising at least the terminal (1a, 10) and a device for access (3; 30a, 30b, 30c) to the access network (4), said access sessions server (7) being suitable for providing information (I₇; I₇₀) relating to an access session of the terminal to the access network (4),
said obtaining method being such that it comprises, on receipt of a request (R₂; R₂₀) for information relating to the terminal originating from an application server (9):
the dispatching of an interrogation request (R₃, R₃₀) including the identifier of the access device (3; 30a, 30b, 30c) of said local network to an autoconfiguration server (5) able to configure at least one item of equipment of said local network (2; 20a, 20b, 20c),
in response to said interrogation request (R₃, R₃₀), the receiving of a message (M₁, M₁₀) from the auto-configuration server (5), said message (M₁, M₁₀) including information (I₅; I_{5b}, I_{5c}) relating to a local environment of said terminal (1a; 10), said information (I₅; I_{5b}, I_{5c}) relating to a local environment of said terminal (1a; 10) comprising the configuration parameters for at least one item of equipment of said local network, and
the providing of said information to the application server (9).

2. Method according to Claim 1, **characterized in that** it furthermore comprises the dispatching (E₇; E₇₀) by the access session server (7) to the application server (9) of said information (I₇; I₇₀) relating to an access session of the terminal jointly with the information (I₅; I_{5b}, I_{5c}) relating to a local environment of the terminal (1a; 10).

3. Method implemented by an auto-configuration server (5) of an access network (4), the auto-configuration server (5) being able to configure at least one item of equipment of a local network (2; 20a, 20b, 20c) comprising at least a terminal (1a, 10) and a device for access (3; 30a, 30b, 30c) to the access network (4), the method being such that it comprises:
- the receiving by said auto-configuration server (5) of an interrogation request (R₃; R₃₀) including the identifier of the access device (3; 30a, 30b, 30c) of said local network, originating from an access sessions server (7), so as to obtain information selected from information (I₅; I_{5b}, I_{5c}) relating to a local environment of the terminal (1a; 10), said information (I₅; I_{5b}, I_{5c}) relating to a local environment of said terminal (1a; 10) comprising the configuration parameters for at least one item of equipment of said local network;
- selecting by said auto-configuration server (5) of the information relating to a local environment of the terminal to be provided to the access sessions server (7) as a function of a service to be provided to the terminal by an application server (9); and
- the providing (E₆, E₇; E₆₀, E₇₀) by said auto-configuration server (5) of said selected information to said access sessions server (7), in response to said request.

4. Method according to Claim 3, **characterized in that** the information (I₅; I_{5b}, I_{5c}) relating to a local environment of the terminal comprises information relating to facilities for access (30b, 30c) to the access network (4) which neighbour the terminal and **in that** the method comprises the selecting of an access facility from among said access facilities as a function of the service to be provided by the application server (9).

5. Method of providing a service to a terminal (1a; 10) belonging to a local network (2; 20a, 20b, 20c) comprising at least the terminal (1a, 10) and a device for access (3; 30a, 30b, 30c) to an access network (4), the method comprising:
- the dispatching of a request (R₂;R₂₀) for information relating to a terminal by an application server to an access sessions server (7) of the access network (4);
- the obtaining and the providing by said access sessions server (7) to said application server of information relating to an access session of the terminal to an access network (4);
- the obtaining and the providing of information selected from information relating to a local environment of the terminal to said application server (9) by said access sessions server (7) in accordance with a method according to Claim 1, said information being selected by an auto-configuration server (5) as a function of a service to be provided; and
- the providing (Eg; E₉₀) by said application server (9) to said terminal of at least one suitable service as a function at one and the same time of the information (I₇; I₇₀) relating to an access session of the terminal and of said selected information.

6. Method according to Claim 5, **characterized in that** said access sessions server provides said selected information supplemented with said information (I₇; I₇₀) relating to an access session of the terminal.

7. Method according to Claim 5, **characterized in that** the information (I₅; I_{5b}, I_{5c}) relating to a local environment of the terminal comprises information relating to facilities for access (30b, 30c) to the access network (4) which neighbour the terminal and **in that** the method comprises the selecting of an access facility from among said access facilities as a function of the suitable service to be provided.

8. Access sessions server (7), suitable for providing information relating to an access session to an access network of a terminal belonging to a local network (2; 20a, 20b, 20c) comprising at least the terminal (1a, 10) and a device for access (3; 30a, 30b, 30c) to the access network (4), such that it comprises means for, on receipt of a request (R₂; R₂₀) for information relating to the terminal originating from an application server (9):
dispatching an interrogation request (R₃, R₃₀) including the identifier of the access device (3; 30a, 30b, 30c) of said local network to an auto-configuration server (5) able to configure at least one item of equipment of said local network (2; 20a, 20b, 20c),
in response to said interrogation request (R₃, R₃₀), receiving a message (M₁, M₁₀) from the autoconfiguration server (5), the message including information (I₅; I_{5b}, I_{5c}) relating to a local environment of the terminal (1a; 10), said information (I₅; I_{5b}, I_{5c}) relating to a local environment of said terminal. (1a; 10) comprising: the configuration parameters for at least one item of equipment of said local network, and
providing this information to said application server (9).

9. Auto-configuration server (5) able to configure at least one item of equipment of a local network (2; 20a, 20b, 20c) comprising: at least one terminal (1a, 10) and a device for access (3; 30a, 30b, 30c) to an access network (4), the auto-configuration server (5) comprising means for obtaining information (I₅; I_{5b}, I_{5c}) relating to a local environment of the terminal (1a; 10), such that it furthermore comprises means for receiving an interrogation request (R₃; R₃₀) including the identifier of the access device (3; 30a, 30b, 30c) of said local network, originating from an access sessions server (7), so as to obtain information selected from information (I₅; I_{5b}, I_{5c}) relating to a local environment of the terminal (1a; 10), said information (I₅; I_{5b}, I_{5c}) relating to a local environment of said terminal (1a; 10) comprising the configuration parameters for at least one item of equipment of said local network, means for selecting information relating to a local environment of the terminal to be provided to the access sessions server (7) as a function of a service to be provided to the terminal by an application server (9), and means for providing the selected information to said access sessions server (7), in response to said interrogation request (R₃; R₃₀).

10. Computer program (P₁) comprising instructions for the implementation of all the steps of the method according to Claim 3, when said program is executed by a computer.

11. Computer program (P₂) comprising: instructions for the implementation of all the steps of the method according to Claim 1, when said program is executed by a computer.

12. System comprising a terminal (1a; 10) belonging to a local network (2), an auto-configuration server (5) according to Claim 9, an access sessions server (7) according to Claim 8 and an application server (9) which is able to provide services to said terminal (1a; 10), said application server (9) comprising:
- means for dispatching a request for information relating to a terminal (1a; 10) to said access sessions server; and
- means for providing said terminal with at least one suitable service as a function at one and the same time of the information relating to an access session of the terminal and of the information relating to a local environment of the terminal.

## Patentansprüche

1. Verfahren zum Erhalt, durch einen Zugriffssitzungsserver (7) eines Zugriffsnetzes (4), von Informationen (I₅; I_{5b}, I_{5c}) bezüglich eines Endgeräts (1a; 10), das zu einem lokalen Netz (2; 20a, 20b, 20c) gehört, welches mindestens das Endgerät (1a, 10) und eine Zugriffsvorrichtung (3; 30a, 30b, 30c) zum Zugriffsnetz (4) enthält, wobei der Zugriffssitzungsserver (7) geeignet ist, um Informationen (I₇; I₇₀) bezüglich einer Zugriffssitzung des Endgeräts zum Zugriffsnetz (4) zu liefern,
wobei das Erhaltungsverfahren so ist, dass es bei Empfang einer Anforderung (R₂; R₂₀) von Informationen bezüglich des Endgeräts von einem Anwendungsserver (9) enthält:
das Senden einer Abfrageanforderung (R₃, R₃₀), die die Kennung der Zugriffsvorrichtung (3; 30a, 30b, 30c) des lokalen Netzes umfasst, an einen Autokonfigurationsserver (5), der mindestens eine Ausrüstung des lokalen Netzes (2; 20a, 20b, 20c) konfigurierten kann,
als Antwort auf die Abfrageanforderung (R₃, R₃₀) den Empfang einer Mitteilung (M₁, M₁₀) des Autokonfigurationsservers (5), wobei die Mitteilung (M₁, M₁₀) Informationen (I₅; I_{5b}, I_{5c}) bezüglich einer lokalen Umgebung des Endgeräts (1a; 10) umfasst, wobei die Informationen (I₅; I_{5b}, I_{5c}) bezüglich einer lokalen Umgebung des Endgeräts (1a; 10) die Konfigurationsparameter für mindestens eine Ausrüstung des lokalen Netzes enthalten, und das Liefern der Informationen an den Anwendungsserver (9).

2. Verfahren nach Anspruch 1, **dadurch gekennzeichnet, dass** es außerdem das Senden (E₇; E₇₀) durch den Zugriffssitzungsserver (7) an den Anwendungsserver (9) der Informationen (I₇; I₇₀) bezüglich einer Zugriffssitzung des Endgeräts zusammen mit den Informationen (I₅; I_{5b}, I_{5c}) bezüglich einer lokalen Umgebung des Endgeräts (1a; 10) enthält.

3. Verfahren, das von einem Autokonfigurationsserver (5) eines Zugriffsnetzes (4) angewendet wird, wobei der Autokonfigurationsserver (5) mindestens eine Ausrüstung eines lokalen Netzes (2; 20a, 20b, 20c) konfigurieren kann, welches mindestens Endgerät (1a, 10) und eine Zugriffsvorrichtung (3; 30a, 30b, 30c) zum Zugriffsnetz (4) enthält, wobei das Verfahren so ist, dass es enthält:
- den Empfang durch den Autokonfigurationsserver (5) einer Abfrageanforderung (R₃; R₃₀), die die Kennung der Zugriffsvorrichtung (3; 30a, 30b, 30c) des lokalen Netzes umfasst, von einem Zugriffssitzungsserver (7), um Informationen zu erhalten, die aus den Informationen (I₅; I_{5b}, I_{5c}) bezüglich einer lokalen Umgebung des Endgeräts (1a; 10) ausgewählt werden, wobei die Informationen (I₅; I_{5b}, I_{5c}) bezüglich einer lokalen Umgebung des Endgeräts (1a; 10) die Konfigurationsparameter für mindestens eine Ausrüstung des lokalen Netzes enthalten;
- eine Auswahl durch den Autokonfigurationsserver (5) der Informationen bezüglich einer lokalen Umgebung des Endgeräts, die an den Zugriffssitzungsserver (7) abhängig von einem durch einen Anwendungsserver (9) an das Endgerät zu liefernden Dienst zu liefern sind; und
- das Liefern (E₆, E₇; E₆₀, E₇₀) durch den Autokonfigurationsserver (5) der ausgewählten Informationen an den Zugriffssitzungsserver (7) als Antwort auf die Anforderung.

4. Verfahren nach Anspruch 3, **dadurch gekennzeichnet, dass** die Informationen (I₅; I_{5b}, I_{5c}) bezüglich einer lokalen Umgebung des Endgeräts Informationen bezüglich von Zugängen (30b, 30c) zum Zugriffsnetz (4) enthalten, die dem Endgerät benachbart sind, und dass das Verfahren die Auswahl eines Zugangs unter den Zugängen abhängig von dem vom Anwendungsserver (9) zu liefernden Dienst enthält.

5. Verfahren zur Lieferung eines Diensts an ein Endgerät (1a; 10), das zu einem lokalen Netz (2; 20a, 20b, 20c) gehört, welches mindestens das Endgerät (1a, 10) und eine Zugriffsvorrichtung (3; 30a, 30b, 30c) zu einem Zugriffsnetz (4) enthält, wobei das Verfahren enthält:
- das Senden einer Anforderung (R₂; R₂₀) von Informationen bezüglich eines Endgeräts durch einen Anwendungsserver an einen Zugriffssitzungsserver (7) des Zugriffsnetzes (4);
- den Erhalt und das Liefern durch den Zugriffssitzungsserver (7) an den Anwendungsserver von Informationen bezüglich einer Zugriffssitzung des Endgeräts zu einem Zugriffsnetz (4);
- den Erhalt und das Liefern von ausgewählten Informationen unter Informationen bezüglich einer lokalen Umgebung des Endgeräts an den Anwendungsserver (9) durch den Zugriffssitzungsserver (7) gemäß einem Verfahren nach Anspruch 1, wobei die Informationen von einem Autokonfigurationsserver (5) abhängig von einem zu liefernden Dienst ausgewählt werden; und
- das Liefern (E₉; E₉₀) durch den Anwendungsserver (9) an das Endgerät mindestens eines geeigneten Diensts abhängig sowohl von den Informationen (I₇; I₇₀) bezüglich einer Zugriffssitzung des Endgeräts als auch den ausgewählten Informationen.

6. Verfahren nach Anspruch 5, **dadurch gekennzeichnet, dass** der Zugriffssitzungsserver die ausgewählten Informationen vervollständigt durch die Informationen (I₇; I₇₀) bezüglich einer Zugriffssitzung des Endgeräts liefert.

7. Verfahren nach Anspruch 5, **dadurch gekennzeichnet, dass** die Informationen (I₅; I_{5b}, I_{5c}) bezüglich einer lokalen Umgebung des Endgeräts Informationen bezüglich von Zugängen (30b, 30c) zum Zugriffsnetz (4) enthalten, die dem Endgerät benachbart sind, und dass das Verfahren die Auswahl eines Zugangs unter den Zugängen abhängig vom zu liefernden geeigneten Dienst enthält.

8. Zugriffssitzungsserver (7), der geeignet ist, um Informationen bezüglich einer Zugriffssitzung auf ein Zugriffsnetz eines Endgeräts zu liefern, das zu einem lokalen Netz (2; 20a, 20b, 20c) gehört, welches mindestens das Endgerät (1a, 10) und eine Zugriffsvorrichtung (3; 30a, 30b, 30c) zum Zugriffsnetz (4) enthält, derart, dass er Einrichtungen enthält, um bei Empfang einer Anforderung (R₂; R₂₀) von Informationen bezüglich des Endgeräts, die von einem Anwendungsserver (9) kommen:
eine Abfrageanforderung (R₃, R₃₀), die die Kennung der Zugriffsvorrichtung (3; 30a, 30b, 30c) des lokalen Netzes umfasst, an einen Autokonfigurationsserver (5) zu senden, der mindestens eine Ausrüstung des lokalen Netzes (2; 20a, 20b, 20c) konfigurieren kann,
als Antwort auf die Abfrageanforderung (R₃, R₃₀) eine Mitteilung (M₁, M₁₀) vom Autokonfigurationsserver (5) zu empfangen, wobei die Mitteilung Informationen (I₅; I_{5b}, I_{5c}) bezüglich einer lokalen Umgebung des Endgeräts (1a; 10) umfasst, wobei die Informationen (I₅; I_{5b}, I_{5c}) bezüglich einer lokalen Umgebung des Endgeräts (1a; 10) die Konfigurationsparameter für mindestens eine Ausrüstung des lokalen Netzes enthalten, und
diese Informationen an den Anwendungsserver (9) zu liefern.

9. Autokonfigurationsserver (5), der mindestens eine Ausrüstung eines lokalen Netzes (2; 20a, 20b, 20c) konfigurieren kann, welches mindestens ein Endgerät (1a, 10) und eine Zugriffsvorrichtung (3; 30a, 30b, 30c) auf ein Zugriffsnetz (4) enthält, wobei der Autokonfigurationsserver (5) Einrichtungen enthält, um Informationen (I₅; I_{5b}, I_{5c}) bezüglich einer lokalen Umgebung des Endgeräts (1a; 10) zu erhalten, derart, dass er außerdem Einrichtungen zum Empfang einer Abfrageanforderung (R₃; R₃₀), die die Kennung der Zugriffsvorrichtung (3; 30a, 30b, 30c) des lokalen Netzes umfasst, von einem Zugriffssitzungsserver (7), um ausgewählte Informationen unter den Informationen (I₅; I_{5b}, I_{5c}) bezüglich einer lokalen Umgebung des Endgeräts (1a; 10) zu erhalten, wobei die Informationen (I₅; I_{5b}, I_{5c}) bezüglich einer lokalen Umgebung des Endgeräts (1a; 10) die Konfigurationsparameter für mindestens eine Ausrüstung des lokalen Netzes enthalten, Einrichtungen zur Auswahl von Informationen bezüglich einer lokalen Umgebung des Endgeräts, die an den Zugriffssitzungsserver (7) abhängig von einem an das Endgerät von einem Anwendungsserver (9) zu liefernden Dienst zu liefern sind, und Einrichtungen enthält, um die ausgewählten Informationen am den Zugriffssitzungsserver (7) als Antwort auf die Abfrageanforderung (R₃; R₃₀) zu liefern.

10. Computerprogramm (P₁), das Anweisungen für die Durchführung aller Schritte des Verfahrens nach Anspruch 3 enthält, wenn das Programm von einem Computer ausgeführt wird.

11. Computerprogramm (P₂), das Anweisungen für die Durchführung aller Schritte des Verfahrens nach Anspruch 1 enthält, wenn das Programm von einem Computer ausgeführt wird.

12. System, das ein Endgerät (1a; 10), das zu einem lokalen Netz (2) gehört, einen Autokonfigurationsserver (5) nach Anspruch 9, einen Zugriffssitzungsserver (7) nach Anspruch 8 und einen Anwendungsserver (9) enthält, der Dienste an das Endgerät (1a; 10) liefern kann, wobei der Anwendungsserver (9) enthält:
- Einrichtungen, um eine Anforderung von Informationen bezüglich eines Endgeräts (1a; 10) an den Eugriffssitzungsserver zu senden; und
- Einrichtungen, um an das Endgerät mindestens einen geeigneten Dienst abhängig sowohl von den Informationen bezüglich einer Zugriffssitzung des Endgeräts als auch Informationen bezüglich einer lokalen Umgebung des Endgerät zu liefern.
